Europäisches Patentamt

European Patent Office

Office européen des brevets

(19)

(11) Publication number: **0 300 052**
A1

## (12) EUROPEAN PATENT APPLICATION
published in accordance with Art. 158(3) EPC

(21) Application number: **88901310.8**

(22) Date of filing: **29.01.88**

Data of the international application taken as a basis:

(86) International application number:
**PCT/JP88/00079**

(87) International publication number:
**WO88/05719 (11.08.88 88/18)**

(51) Int. Cl.³: **B 29 C 45/06**
**B 29 C 45/76**

(30) Priority: **02.02.87 JP 20519/87**

(43) Date of publication of application:
**25.01.89 Bulletin 89/4**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **NEKO, Noriaki**
**Fanuc Utsugiryo 386-1, Ishikawa-cho**
**Hachioji-shi Tokyo 192(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) DEVICE FOR ESTABLISHING THE ORDER OF USE OF MOLDS.

(57) A device for establishing the order of use of molds correctly by manual operation. When the operator manipulates a cursor key (3d) and a soft key (K) of this device to input the order of use of the table portions of the mold exchanger (2), the CRT screen (8a) displays a set order of use of table portions in terms of numerals "1", "2",... corresponding to the table names. A numeral "0" indicates that the corresponding table portion is not reserved for use. Further, a soft key that corresponds to an unreserved table portion is digitally displayed, and the numerals of the soft keys corresponding to the orderly reserved table portions are erased. This prevents erroneous setting of the order of use.

EP 0 300 052 A1

Croydon Printing Company Ltd.

./...

**FIG.3**

PROCESSING OF DIE WORKING SEQUENCE INDICATION

- S1 — DISPLAY 0 TO KEY K0
- (J)
- S2 — DISPLAY SECTION OF MT1 TO T1
- S3 — DISPLAY SECTION OF MT2 TO T2
- S4 — DISPLAY SECTION OF MT3 TO T3
- S5 — DISPLAY SECTION OF MT4 TO T4

- S6 — $j \leftarrow 1$
- S7 — $i \leftarrow 1$
- S8 — $MTi = j$? — YES / NO
- S9 — $i \leftarrow i + 1$
- S10 — $i = 5$ — NO / YES
- S11 — $KFj \leftarrow 1$
- S12 — DISPLAY NUMERAL J TO KEY Kj
- S13 — $KFj \leftarrow 0$
- S14 — DISPLAY BLANK TO KEY Kj
- S15 — $j \leftarrow j + 1$
- S16 — $j = 5$ — NO / YES
- S17 — PROCESSINGS OF DIE WORKING SEQUENCE INPUT AND OF CHANGING SEQUENCE INDICATION

- 1 -

SPECIFICATION
APPARATUS FOR INPUTTING A SEQUENCE OF USE OF DIES
Technical Field

The present invention relates to an apparatus for inputting a sequence of use of dies, which permits an operator to manually input an accurate working sequence of dies, and more particularly to an input apparatus of this kind for use in a die exchanger of an injection molding machine.

Background Art

A typical die exchanger comprises a rotary table having a plurality of table sections on which dies are respectively mounted, means for driving the table to a rotary position corresponding to a selected one of these dies, and means for transferring the selected die along a transfer path extending between the table and the injection molding machine, and the exchanger operates to exchange the dies in a predetermined sequence of use of these dies. Conventionally, this working sequence is set by an operator by operating ten keys of an input apparatus, for instance.

In the case of utilizing the conventional input apparatus, however, there often occurs an error in setting the die working sequence. For instance, if the operator makes an error such that the same working order is allocated to different dies, the die exchanger cannot determines which of these dies should be selected, resulting in a malfunction of the die exchanger. Further, in case of resetting the working sequence, if the operator forgets to change any one of the individual die working orders to be changed, a similar wrong situation can occurs.

Disclosure of the Invention

The object of the present invention is to provide an apparatus for inputting a sequence of use of dies, which is capable of being easily operable by an operator, and of preventing duplication in setting individual working orders of the dies.

In order to achieve the above-mentioned object, according to the present invention, an apparatus for inputting a sequence of use of dies, comprises: a selection means for selecting one of the dies to which a working order is to be allocated, said selection means being manually operable; means for setting the sequence of use of dies, said setting means having a plurality of operation means each for allocating a corresponding one of individual working orders, each of the operation means being manually operable; a first display means for indicating a first predetermined information indicative of whether or not a respective one of the dies has been allocated with a working order and indicative of what working order has been allocated to each of the dies; a second display means for indicating a second predetermined information indicative whether or not a respective one of said plurality of operation means has been already operated for working order allocation; and a control means for controlling said first and second display means in accordance with operations of said selection means and of said sequence setting means.

In this manner, according to the present invention, when the selection means and the plurality of operation means of the sequence setting means are manually operated by an operator so as to allocate one or more working orders to one or more dies, the first and second display means are controlled by the control means which responds to this allocating operation, so that the one or more working orders, allocated to the one or more dies, are indicated by the first display means, and that an indication is made by the second display means as to whether or not each of the operation means has been operated for the working order allocation. Accordingly, the operator can easily set the sequence of use of dies and is prevented from erroneously allocating the same working order to different dies so that he can accurately set the sequence of use of dies.

Brief Description of the Drawings

Fig. 1 is a schematic block diagram showing an essential part of an apparatus for inputting a sequence of use of dies, according to an embodiment of the present invention;

Fig. 2 is a view showing, by way of example, a screen for setting a die working schedule, in relation to soft keys for setting individual working orders;

Fig. 3 is a flowchart showing a process for indicating the die working sequence, executed by a micro processor for a programmable machine controller; and

Fig. 4 is a flowchart showing a process for changing the sequence indication.

Best Mode of Carrying Out the Invention

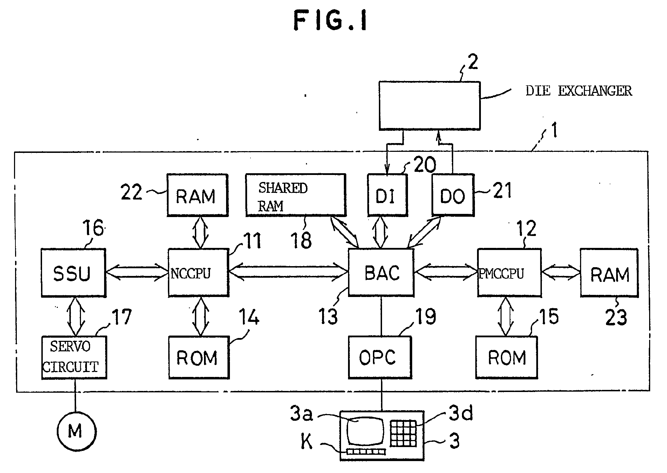

In Fig. 1, an apparatus for inputting a sequence of use of dies, i.e., a die working sequence, according to an embodiment of the present invention, is mounted on a die exchanger of an injection molding machine (not shown), for instance, and comprises a numerical control unit (hereinafter referred to as NC unit) having functions of controlling the injection molding machine and of controlling the die exchanger, and a manual data input device (hereinafter referred to as CRT/MDI) with a CRT display device.

- 4 -

The NC unit 1 comprises a micro processor (hereinafter referred to as NCCPU) 11 for numerical control, and another micro processor (hereinafter referred to as PMCCPU) 12 for a programmable machine controller. A ROM 15, which is connected to the PMCCPU 12, stores therein a sequence program for controlling the injection molding machine, and other sequence programs for processes of indicating a sequence of use of dies and of inputting individual working orders of the dies and changing the sequence indication. A ROM 14, which is connected to the NCCPU 11, stores therein a management program for generally controlling the injection molding machine. Further connected to the NCCPU 11 through a servo interface 16 are servo circuits (one of which is shown by reference numeral 17) for respectively controlling the drive of servomotors (one of which is shown by reference numeral M) for individual axes such as injection axis, clamp axis, screw rotation axis, ejection axis, etc. Furthermore, reference numeral 18 denotes a nonvolatile shared RAM, having a backup battery, for storing therein a program for controlling various operations of the injection molding machine, various set values, parameters, die working sequence (mentioned later), etc. Reference numeral 13 denotes a bus arbiter controller (hereinafter referred to as BAC) to which the CRT/MDI 13 is connected through an operator panel controller 19, and to which respective buses of the NCCPU 11, PMCCPU 12, shared RAM 18, input circuit 20 and output circuit 21 are connected, so that a bus to be used is selected by means of the BAC 13. Moreover, reference numerals 22, 23 respectively denote RAMs for temporal storage of data during various processings of the NCCPU 11 and the PMCCPU 12.

A die exchanger 2, which is connected to the NC unit 1 through the input/output circuits 20, 21, is constructed in a conventional manner, and comprises a rotary table having table sections (hereinafter referred to as tables) on which dies are mounted, the tables being four, for instance, in number.

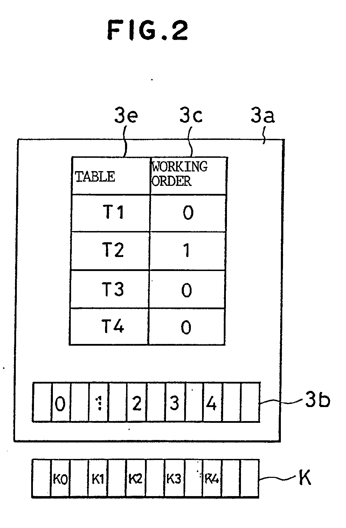

The CRT/MDI 13 comprises a CRT screen 3a, cursor keys/ten keys 3d, and soft keys K, these keys being arranged to be manually operable by an operator, and the cursor keys serving as selection means. The soft keys K include ones having a function of selecting a screen for setting a die working schedule, and is so arranged that a setting screen, shown by way of example in Fig. 2, is displayed on the CRT screen 3a upon such soft keys being operated by the operator. That is, according to the CRT/MDI 13 of this embodiment, displayed on the CRT screen 3a are: a table name indication column 3c consisting of an index "TABLE" and four table names "T1" to "T4"; a working order indication column consisting of an index "WORKING ORDER" and four indication sections for indicating whether or not each of working orders of the tables T1 to T4 has been set and indicating the individual working orders of these tables, by the use of numerals "0" to "4"; and a column 3b for indicating a soft key operation being permitted.

Further, the soft keys K of the CRT/MDI 13 include soft keys (means for setting the die working sequence) K1 to K4 each for allocating an associated working order to a selected one of the tables T1 to T4, such selection being made by cursor key operation, and a soft key (means for canceling the set working order) K0 for canceling the working order previously set. The CRT/MDI 13 is arranged so that a display is made as to whether or not the individual keys K0 to K4 are permitted to be operated, by means of presence/absence of the numerals "0" to "4" in five indication sections of the indication column 3b, respectively.

In the meantime, according to this embodiment, the die temperature, the scheduled production amount of molded products, etc. other than the above-mentioned indication items are displayed by the use of the die working schedule setting screen. However, such arrangement does not relate to the gist of the invention, illustration and explanation thereof will be omitted.

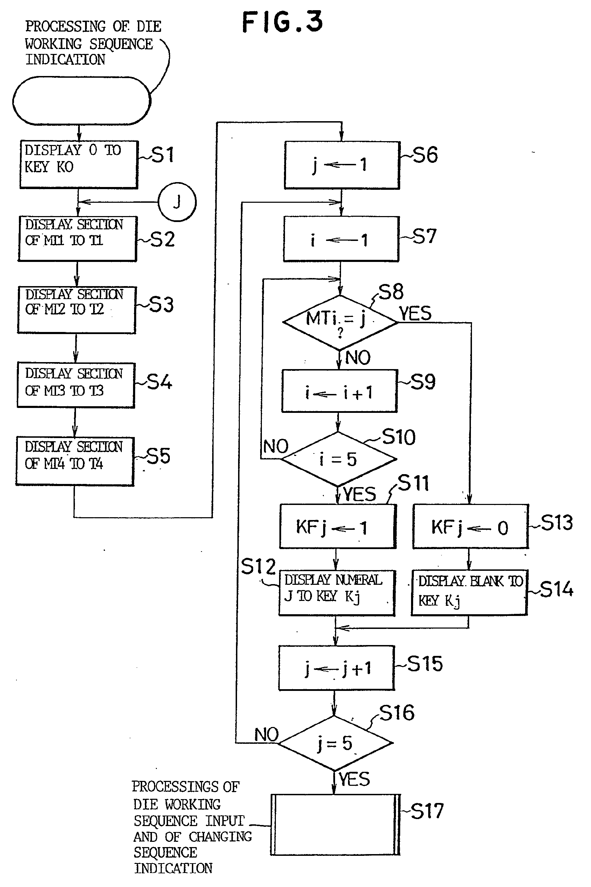

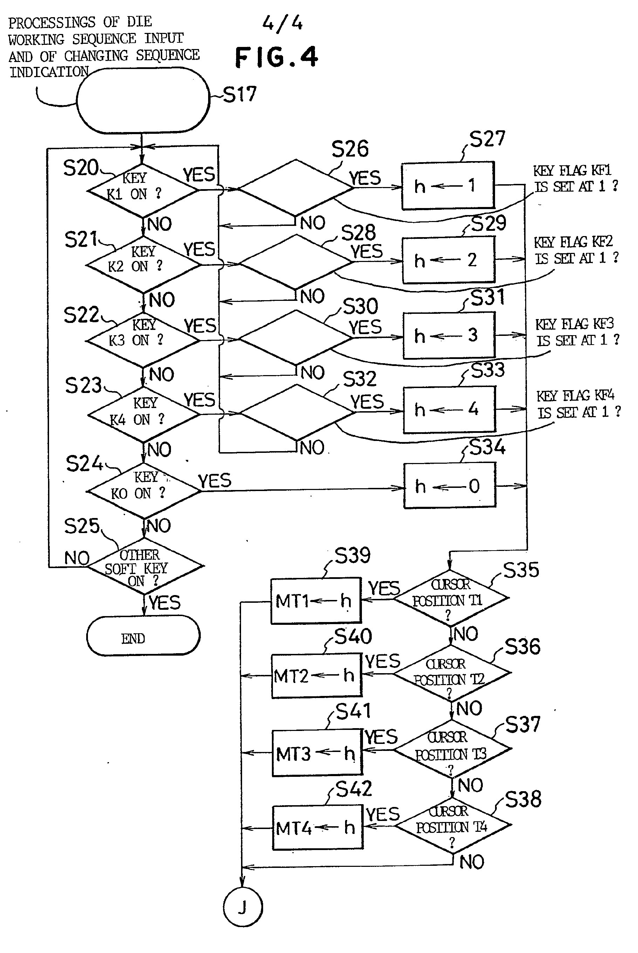

In the following, with reference to Figs. 3 and 4, the operation of the die working sequence inputting apparatus will be explained.

When the soft key, provided in the CRT/MDI 13, for selecting the die working schedule setting screen is operated by the operator, the setting screen shown in Fig. 2 is displayed on the CRT screen 3a. At first, the PMCCPU 12 displays "0" on the leftmost indication section, corresponding to the soft key K0, of the indication column 3b for permission of soft key operation (the step S1). Next, the PMCCPU reads out stored contents of table working order memory sections (hereinafter referred to memory sections) MT1 to MT4 of the shared RAM 18, which store therein the individual working orders of the respective tables T1 to T4 of the die exchanger 2, and causes the CRT/MDI 13 to display the individual working orders in the four indication sections of the working order indication column 3c, respectively (the steps S2 to S5). In the meantime, if the working order of any one of the dies has not been set as yet, "0" is displayed in a corresponding one of the indication sections of the working order indication

- 7 -

column 3c.  Accordingly, if the working order of none of the dies has been set, all the indication sections display "0", respectively.

Next, the PMCCPU 12 sets a key index $i$ and a table index $i$ to "1", which serve as parameters for execution of indication processing, respectively (the steps S6 and S7).  Then, the PMCCPU reads out the content of the memory section MTi (here, the memory section MT1) corresponding to the table index $i$, and determines whether or not the thus readout stored content is consistent with the key index $i$ (here, "1"), at the step S8.  If they are inconsistent with each other, the table index $i$ is incremented (the step S9), and the processing of the steps S8 to S10 is repeated until the index $i$ equals to "5".  That is, the PMCCPU determines whether or not the numerical value of "1" is stored in the respective memory sections MT1 to MT4, in other words, it determines whether or not the first working order is allocated to any one of the dies.  If the numerical value of "1" is stored in any of the memory sections MT1 to MT4, the PMCCPU sets the key flag KFj (here, KF1) to "0" so as to store the fact that the i-th (i = 1) working order has been allocated (the step S13), and, at the step S14, makes a blank in an associated one of the indication sections of the column (hereinafter referred to as permission indication column) 3b for indicating that a corresponding soft key is permitted to be operated, which associated one section corresponds to the soft key Kj (here, K1), with the intention of preventing duplicated setting of the i-th (i = 1) working order.  In the processing of the steps S8 - S10, if the numerical value of "1" is not stored in any of the memory sections MT1 to MT4, the key flag KF1 is set at "1" so as to store the fact that the first working order has not been allocated as yet (the step S11), and a display of "1" is made in the indication section of the permission indication column 3b corresponding to the soft key K1 to indicate that the first working order is still permitted to be inputted (the step S12).

Next, the PMCCPU 12 increments the key index $i$ to "2" (the step S15), and executes the processing of the step S7 and the subsequent steps after determining that the index $i$ is not "5" at the step S16. That is, the PMCCPU determines whether numerical value "2" is stored in any of the memory sections MT1 to MT4, and, if such value is stored, the PMCCPU sets the key flag KF2 at "0" and makes a blank in the indication section of the indication column 3b corresponding to the soft key K2, whereas, if such value is not found, the PMCCPU sets the key flag KF2 at "1" and causes the indication section to display "2".

Thereafter, the PMCCPU executes the processing of the step S7 and the subsequent steps, with the key index $i$ incremented to "3" at the step S15, and then executes the same processing, with the same index incremented to "4". After completion of this processing, it is determined that the key index $i$ equals to "5" (the step S16). As a consequence, if any one of the numerical values "1" to "4" is stored in any one of the memory sections MT1 to MT4, the indication section of the permission indication column 3b, associated with each soft key K1 - K4 corresponding to the stored numerical value, is made blank. Accordingly, only one or more numerical values (working orders), not stored in any of the memory sections MT1 to MT4, are displayed in one or more indication sections of the indication column 3b, corresponding to one or more numerical values not stored. That is, only one or more working orders, which have not been inputted as yet, are displayed in numeral in the permission indication column 3b.

In this manner, the processings of die working sequence indication and of indication of permitted soft key operation are completed, and then the control program is transferred to processings of die working sequence input and of changing the sequence indication (the step S17). In the latter processings, the PMCCPU 12 always monitors whether or not the soft keys K0 to K4 and other soft keys are depressed or operated, as shown in Fig. 4 (the steps S20 to S25). When the soft key K1 is operated, for instance (the step S20), the CPU 12 determines whether or not the key flag KF1 is set at "1" (the step S26). If the key flag KF1 is set at "0", the control program returns to the step S20 again, without a particular processing being executed in response to the operation of the soft key K1, because such flag state indicates that "1" has been already stored in one of the memory sections MT1 to MT4, that is, the die (table) to be firstly worked has been set. In the meantime, the numerical indication of "1" for permission of soft key K1 operation is erased from the indication column 3b when the key flag KF1 is set to "0". Accordingly, the depression of the soft key K1 under such condition is recognized to be an erroneous operation by the operator. Hence, the CPU 12 repeatedly executes the steps S20 and S26, to assume a standby mode until the depression of the key K1 is released, to thereby cause the key K1 operation to be ineffective.

On the other hand, it is determined, at the step S26, that the key flag KF1 is set to "1", i.e., the die (table) to which the first working order is to be allocated has not been set as yet, the CPU 12 sets an input key register $\underline{h}$ at "1" at the step S27. Similarly, when any one of the soft keys K2 to K4 is depressed, that is, when it is determined that the die working order which corresponds to the soft key KF2, KF3 or KF4 has not been set as yet (the steps S28, S30, S32), the input key register $\underline{h}$ is set to "2", "3" or "4" (the steps S29, S31, S33).

Then, the CPU 12 determines the cursor position being consistent with which of the table names T1 to T4 displayed on the CRT screen 3a (the steps S35 to S38), and causes the stored content of the input key register $\underline{h}$ to be transferred to and stored in an associated one memory section MT1, MT2, MT3 or MT4 corresponding to the table which is selected by the cursor (the steps S39 to S42).

In the case of the soft key K0 being depressed (the step S24), the input key register $\underline{h}$ is set to "0" without the key flag value being determined, so that an associated one memory section MT1, MT2, MT3 or MT4 corresponding to the cursor position is set to "0" because no key flag for the soft key K0 is set. In the meantime, a value of "0" for permission of operation of the soft key K0 is always displayed in the permission indication column 3b.

In this manner, when a new working order is stored in any of the memories MT1 to MT4, the control program is returned to the step S2, and then respective working orders are indicated in the working order indication column 3c in accordance with the contents of the memories MT1 to MT4 newly stored (the steps S2 to S5). Further, the contents of the respective key flags KF1 to KF4 are renewed (the step S11, S13), and the

numerical indication for permission of operation of one or more soft keys, corresponding to one or more working orders which have been already set, is erased from the indication column 3b (the step S14).

When all the numerals of "1" to "4", respectively indicating the first to fourth working orders, are shown in the working order indication column 3c, all of numerals "1" to "4", respectively indicating the soft keys K1 to K4 being permitted to be operated, are erased from the soft key indication column 3b, with only the numeral of "0" kept indicated. In this case, the key flags KF1 to KF4 are set to "0", and hence the depressing operation of the soft keys K1 to K4 is rendered ineffective when such operation is carried out. In this connection, if the operator wishes to change the sequence of use of dies, at first, he must operate the cursor in such a manner that the cursor is positioned on the table name, which is displayed on the CRT screen 3a and represents that table to which the working order which he wishes to set has been already allocated. Then, he depresses the soft key K0. In response to this key operation, the CPU 12 sets the input key register $h$ at "0" (the step S34), and clears the stored content of the memory section, corresponding to the table selected by the cursor (the steps S35 to S38), to "0". As a consequence, by the processing of the step S8 to S12, the key flag KFj associated with a corresponding one of the tables is set to "1", and the numeral indicative of the soft key which is rendered effective is newly indicated in the permission indication column 3b. Thereafter, the operator selects the table (die) to which the working order that he wishes to set should be allocated, by the use of the cursor, and depresses the soft key Kj which is numerically indicated. As a result, an associated one of the numerals is newly erased from the working order indication column 3c, and the thus erased numeral is newly indicated in the permission indication column 3b. Next, the operator depresses the soft key Kj corresponding to this numeral, so as to input the related working order. In this manner, the operator repeats a similar operation in sequence to change the individual working orders of the respective dies.

In the above-mentioned embodiment, the resetting of the working orders is executed after the indication of "0" is made in the working order indication column 3c by the use of the soft key K0. Alternatively, a reset key may be employed in place of the soft key K0, and the working sequence input apparatus may be so arranged that all of the memory sections MT1 to MT4 are set to "0" upon operation of the reset key, so as to set all the working order indication column 3c to "0" (or make "blanks" in the same column), and at the same time an indication of the soft keys K1 to K4 being operable is made in the indication column 3b, with operation of these keys rendered effective. More specifically, the working sequence input apparatus may be arranged so that, when the soft key serving as the reset key is depressed at the step S24, all of the stored contents of the memory sections MT1 to MT4 are cleared to "0" and then the control program is returned to the step S2.

Although the application of the present invention to the die exchanger of the injection molding machine has been explained in the embodiment, various modifications of the present invention can be made. For instance, the input apparatus of the present invention is applicable to various die exchangers.

Although the soft keys and the CRT display device are employed for setting and canceling the die working sequence and for various indications, the present invention is not limited thereto. Further, although the workable dies (tables) which are four in number are employed in the embodiment, the present invention is not limited thereto, and the working order indication column, soft keys, permission indication column, memory sections may be increased and decreased in accordance with increase/decrease in the number of dies installed.

- 14 -

C L A I M S

1.  An apparatus for inputting a sequence of use of dies, comprises:

a selection means for selecting one of the dies to which a working order is to be allocated, said selection means being manually operable;

means for setting the sequence of use of dies, said setting means having a plurality of operation means each for allocating a corresponding one of individual working orders, each of the operation means being manually operable;

a first display means for indicating a first predetermined information indicative of whether or not a respective one of the dies has been allocated with a working order and indicative of what working order has been allocated to each of the dies;

a second display means for indicating a second predetermined information indicative whether or not a respective one of said plurality of operation means has been already operated for working order allocation; and

a control means for controlling said first and second display means in accordance with operations of said selection means and of said sequence setting means.

2.  An apparatus for inputting a sequence of use of dies according to claim 1, wherein said sequence setting means includes a manually operable second operation means for canceling the working orders previously set, said control means being responsive to operation of said second operation means, so as to control said first and second display means in such a manner that said first and second display means correct their indication contents, a die, subjected to canceling of the working order by said second operation means, being recognized as if no working order had been allocated thereto, operation means, associated with the working order just mentioned being recognized as if it had not been operated as yet.

3. An apparatus for inputting a sequence of use of dies according to claim 1, wherein said first display means is operable to indicate said first predetermined information by the use of a numeral indicative of no working order being allocated and a group of numerals respectively corresponding to the working orders, the first mentioned numeral and the group of numerals being indicated so as to correspond to respective names of the dies.

4. An apparatus for inputting a sequence of use of dies according to claim 2, wherein said second display means includes a plurality of indication sections respectively corresponding to said plurality of operation means, said second display means being operable to indicate that operation means, among said plurality of operation means, which has not been operated as yet, by the use of a numeral indicative of the same operation means in a corresponding one of the plurality of indication sections, and to indicate that operation means which has been already operated by erasing the just mentioned numeral indication, to thereby indicate said second predetermined information.

5. An apparatus for inputting a sequence of use of dies according to claim 1, further comprising:

memory means for storing therein said first and second predetermined information;

wherein, in accordance with stored contents of said memory means, said control means causes said first and second display means to respectively indicate said first and second predetermined information.

6. An apparatus for inputting a sequence of use of dies according to claim 2, wherein said control means is arranged to control said first and second display means in such a manner that a correction of contents of indications is made solely for a die selected by said selection means at the time that said second operation means is operated.

7. An apparatus for inputting a sequence of use of dies according to claim 2, wherein said control means is arranged to control said first and second display means in such a manner that a correction of contents of indications is made for all of the dies when said second operation means is operated.

8. An apparatus for inputting a sequence of use of dies according to claim 1, wherein said control means is arranged to determine whether or not each of said operation means has been operated, and to render that working order allocation ineffective, which is associated with operation of any one of said plurality of operation means which has been already operated.

9. An apparatus for inputting a sequence of use of dies according to claim 1, further comprising:

a manual data input device with display device, having a cursor key serving as said selection means, a plurality of keys serving as said sequence setting means, and a display device serving as said first and second display means; and

a numerical control unit accommodating therein a computer serving as said control means.

10. An apparatus for inputting a sequence of use of dies according to claim 1, wherein said apparatus is mounted on a die exchanger of an injection molding machine.

# FIG.1

DIE EXCHANGER

2

1

22 ~ RAM

SHARED RAM

DI

20

DO ~ 21

16

SSU

11

NCCPU

18

BAC

13

12

PMCCPU

RAM

17

SERVO CIRCUIT

14

ROM

19

OPC

15

ROM

23

M

3a

3d

K

3

# FIG.2

| | 3e | 3c | 3a |

| TABLE | WORKING ORDER |
|-------|---------------|
| T1 | 0 |
| T2 | 1 |
| T3 | 0 |
| T4 | 0 |

| 0 | 1 | 2 | 3 | 4 | | — 3b

| K0 | K1 | K2 | K3 | R4 | | — K

# FIG.3

PROCESSING OF DIE
WORKING SEQUENCE
INDICATION

DISPLAY 0 TO KEY K0 — S1

( J )

DISPLAY SECTION OF MT1 TO T1 — S2

DISPLAY SECTION OF MT2 TO T2 — S3

DISPLAY SECTION OF MT3 TO T3 — S4

DISPLAY SECTION OF MT4 TO T4 — S5

$j \leftarrow 1$ — S6

$i \leftarrow 1$ — S7

S8 — $MT_i = j$ ? — YES

NO

$i \leftarrow i + 1$ — S9

S10 — $i = 5$

NO

YES

S11 — $KF_j \leftarrow 1$

$KF_j \leftarrow 0$ — S13

S12 — DISPLAY NUMERAL J TO KEY Kj

DISPLAY BLANK TO KEY Kj — S14

$j \leftarrow j + 1$ — S15

S16 — $j = 5$

NO

YES

PROCESSINGS OF DIE WORKING SEQUENCE INPUT AND OF CHANGING SEQUENCE INDICATION — S17

0300052

PROCESSINGS OF DIE WORKING SEQUENCE INPUT AND OF CHANGING SEQUENCE INDICATION

4/4

FIG.4

S17

S20 KEY K1 ON ? — YES → S26 — YES → S27 h ← 1 — KEY FLAG KF1 IS SET AT 1 ?
NO

S21 KEY K2 ON ? — YES → S28 — YES → S29 h ← 2 → KEY FLAG KF2 IS SET AT 1 ?
NO

S22 KEY K3 ON ? — YES → S30 — YES → S31 h ← 3 → KEY FLAG KF3 IS SET AT 1 ?
NO

S23 KEY K4 ON ? — YES → S32 — YES → S33 h ← 4 → KEY FLAG KF4 IS SET AT 1 ?
NO

S24 KEY K0 ON ? — YES → S34 h ← 0
NO

S25 OTHER SOFT KEY ON ? — NO
YES

END

S39 MT1 ← h — YES ← S35 CURSOR POSITION T1 ?
NO

S40 MT2 ← h — YES ← S36 CURSOR POSITION T2 ?
NO

S41 MT3 ← h — YES ← S37 CURSOR POSITION T3 ?
NO

S42 MT4 ← h — YES ← S38 CURSOR POSITION T4 ?
NO

J

# INTERNATIONAL SEARCH REPORT

International Application No PCT/JP88/00079

## I. CLASSIFICATION OF SUBJECT MATTER (if several classification symbols apply, indicate all) 6

According to International Patent Classification (IPC) or to both National Classification and IPC

Int.Cl$^4$
B29C45/06, B29C45/76

## II. FIELDS SEARCHED

### Minimum Documentation Searched 7

| Classification System | Classification Symbols |
|---|---|
| IPC | B29C45/06, B29C45/76 |

### Documentation Searched other than Minimum Documentation to the Extent that such Documents are Included in the Fields Searched 8

| | | |
|---|---|---|
| Jitsuyo Shinan Koho | 1971 | – 1988 |
| Kokai Jitsuyo Shinan Koho | 1971 | – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 61-114831 (Fanuc Ltd.) 2. June. 1986 (02. 06. 86) Claim (Family: none) | 1-10 |
| P | JP, A, 62-191110 (Fanuc Ltd.) 21. August. 1987 (21. 08. 87) Page 2, upper right column, lines 4 to 18 (Family: none) | 1-10 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 22, 1988 (22. 04. 88) | May 9, 1988 (09. 05. 88) |

| International Searching Authority | Signature of Authorized Officer |
|---|---|
| Japanese Patent Office | |